# EUROPEAN PATENT APPLICATION

(11) **EP 3 266 710 A1**
(43) Date of publication of application: **10.01.2018**
(21) Application number: 17178589.2
(22) Date of filing: 29.06.2017
(51) Int. Cl.: B64D 15/00, B64D 15/12, H05B 3/14, C09D 5/00

(54) **STRUCTURAL ELEMENT WITH HEATER FOR A VEHICLE, MANUFACTURING METHOD AND OPERATING METHOD**

(30) Priority: 04.07.2016 IT 201600069279
(71) Applicant: LEONARDO S.p.A., 00195 Roma (IT)
(72) Inventor: BRELATI, Antonio, 84014 NOCERA INFERIORE (IT); DEL GIUDICE, Rosario, 80127 NAPOLI (IT); RICCO, Ida, 80038 POMIGLIANO D'ARCO (IT); NONIS, Francesco, 80135 NAPOLI (IT)
(74) Representative: Bertolotto, Simone

(57) **Abstract**

A structural element of a means of transport comprising a resistive heater for defrosting operations, wherein the resistor has conduction terminals coupled to respective terminals of a voltage generator adapted to cause a current flux through the resistor. The resistor includes one or more conductive paths of partially reduced graphene oxide (prGO) or partially oxidized graphene (poG) configured to generate, when travelled by the current flux, heat by Joule effect.

## Description

The present invention relates to a structural element with heater for a vehicle, and a method of manufacture and operation of the structural element provided with the heater.

Anti-icing systems of the passive type (which prevent ice build-up) which entail the use of chemical agents, wherein a de-icing liquid is distributed over selected portions of the aircraft, so that the liquid thus distributed can bind, during the flight, the undercooled water drops of the clouds and the resulting mixture slides over the treated surfaces without forming ice, are known in the state of the art.

Anti-icing systems of the active type (which remove the ice), mainly manually activated and of the mechanical type based on pneumatic actions or air/water flows that enable the breakage of the ice layer, are also known.

Active systems of the known type are also difficult to integrate due to difficulties encountered in terms of adhesion to surfaces, strength, flexibility and weight. It is also difficult to equip large surfaces by using these systems.

The object of the present invention is to provide a structural element with heater, particularly of the electric type and which can be automated, and methods of manufacture and operation of the structural element provided with the heater, such as to overcome the disadvantages of the prior art.

According to the present invention, a structural element with heater and methods of manufacture and operation of the structural element equipped with the heater are provided as defined in the appended claims.

For a better understanding of the present invention, preferred embodiments thereof will now be described, purely by way of a non-limiting example, with reference to the accompanying figures, in particular:
- Figure 1 shows a generic structural component housing a heater based on partially reduced graphene oxide or partially oxidized graphene according to one embodiment of the present invention;
- Figure 2 shows a generic structural component housing a heater based on partially reduced graphene oxide or partially oxidized graphene according to another embodiment of the present invention;
- Figure 3 shows an aircraft wing, which includes a structural component housing a heater, according to the respective embodiments of Figures 1 and 2; and
- Figures 4-8 illustrate steps of manufacture of the structural component of Figure 3 housing the heater.

The present invention relates to a structural element of a means of transport adapted to operate at temperatures below the water freezing point. The structural element houses a resistive heater having conduction terminals coupled to respective terminals of a voltage generator so as to induce a current flux through the resistive heater and generate, in use, heat by Joule effect. The resistive heater comprises one or more conductive paths of partially reduced graphene oxide (prGO) or partially oxidized graphene (poG). The conductive paths have a predetermined resistivity value selected so that the current, by flowing through such conductive paths, generates a desired amount of Joule effect heat. An operation of local defrosting of the structural element is thus provided.

"Reduced graphene oxide", also known as "rGO", is intended to mean a layer of graphene (which is an insulator, and has a resistivity equal to or greater than 10¹² Ωm) oxide, which has undergone a reduction process with the aim of removing functional groups, such as hydroxyl (-OH), carboxyl (-COOH) and carbonyl groups (CO), which cause high impedance. The reduction of graphene oxide, i.e. the removal of oxygen atoms from the lattice, can be carried out by using reducing agents (hydrazine, dimethylhydrazine, hydroquinone, NaBH₄), thermal methods, and UV radiation treatments in the presence of TiO₂. Neat graphene (G) and graphene oxide (GO) have complementary physical-electrical properties; the first is an excellent electrical conductor (resistivity ρ≈10⁻⁸ Ωm), while the second is a perfect insulator (resistivity p≤10¹² Ωm).

The grafene oxide reduction process results in obtaining a hybrid material (reduced graphene oxide) with properties that can be modulated by varying the concentration of oxygen, in order to obtain controlled intermediate characteristics, in particular for the resistivity. A layer of reduced graphene oxide may have a resistivity of the same order of magnitude as a conductor.

The grafene oxidation process results in obtaining a hybrid material (partially oxidized graphene), and the same electric resistivity modulation properties as described above shall apply.

The two manufacturing processes carried out through reduction and oxidation are dualistic from the point of view of the manufacture of the heater; in the first case, an insulating layer is first obtained, and then, selected portions thereof are made to be conductive, while, in the second case, a conductive layer is first obtained, and then, respective selected portions thereof are made to be insulating. Therefore, according to the present specification, "partially reduced graphene oxide", also known as "prGO", is intended to mean a layer of graphene oxide that, after the reduction process, has a resistivity of less than 10¹² Ωm and greater than 10⁻⁸ Ωm, in particular between 10⁻⁶ Ωm and 10⁻² Ωm. "Oxidized graphene", also known as "oG", is intended to mean a layer of neat graphene subjected to an oxidation process obtained, for example, by acid oxidation (e.g., with a mixture of sulphuric acid, sodium nitrate and potassium permanganate), which results in the introduction of oxygenated species (groups). The presence of oxygenated groups, such as hydroxyl (-OH), carboxyl (-COOH) and carbonyl (CO) groups, in the lattice increases the resistivity in a controllable manner, until obtaining a layer, or selected portions thereof, having electrical insulation characteristics.

A graphene layer has a resistivity in the order of 10⁻⁸ Ωm; the same layer, after the oxidation process, has a resistivity that can pass from the range of values characteristic of conductors (10⁻⁸÷10⁻⁷ Ωm) to that of insulators (p≤10¹² Ωm)

Therefore, according to the present specification, "partially oxidized graphene", also known as "poG", is intended to mean a layer of graphene that, after the oxidation process, has a resistivity greater than that of neat graphene (10⁻⁸ Ωm) and less than that of graphene oxide (10¹² Ωm) in particular between 10⁻⁶ Ωm and 10⁻² Ωm.

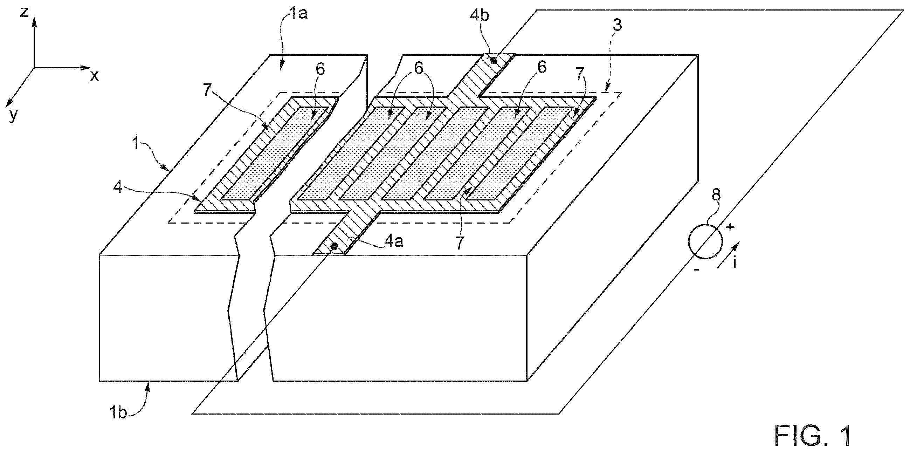

Figure 1 illustrates, in a triaxial X, Y, Z system, and with the reference numeral 1, a portion of a structural component or element (hereinafter simply identified by the term "structure") of an aircraft (not shown in its entirety), for example a portion of a moving part of the aircraft, such as one of the on-board "flap" and "slat" high-lift devices, wing spoilers, wing ailerons, tail rudder, vertical stabilizers, or an avionic radome (nose of the aircraft), tail cone, undercarriage doors, and much more.

The structure 1 has an upper surface 1a and a lower surface 1b, opposite one another along the axis Z. A heating element 4 extends, next to a region 3 of the upper surface 1a, in the form of a thin layer including insulating regions 6 and conductive paths 7, the latter having a resistivity chosen so as to generate, upon the passage of a flux of electric current i, heat by Joule effect. The heat thus generated heats the region 3, as well as the portions of the structure 1 that extend below the region 3 and surround it.

The heating element 4 is functionally connected to conduction terminals of a voltage generator 8 configured to cause, in use, an electric current flux i through the heating element 4 and in particular through the conductive paths 7. The value of the voltage generated by the generator 8, as well as the values of the current i, depend upon the specific application; for example, in the case of avionics, the on-board power supply is used, which is typically of a variable value within the range between 24 V and 48 V (inclusive) in direct current (DC). Low voltage values (e.g., 24-35 V) are used, for example, when the aircraft is on the ground, while high voltage values (e.g., 36-48 V) are used when the aircraft is flying. The choice of the value of the voltage supplied by the generator 8 to the heating element 4 depends, more specifically, on the temperature of the environment outside the aircraft (or rather, on the temperature gradient between the external environment and the region 3 where the heating element 4 is located), as well as the resistivity value of the conductive paths 7. Therefore, heating elements 4 arranged in different areas of the same aircraft can be supplied with different voltages, depending on the value of the temperature gradient and the resistivity value of each heating element 4.

By way of example, in landing or take-off manoeuvring conditions, which are stressful conditions for the moving parts of the aircraft, when the environmental temperature at the region 3 is within the range of from -20 to 0°C, the conductive paths are configured to locally increase the temperature of the region 3 up to 0-2°C, so as to avoid the risk of freezing of the region 3.

According to one embodiment of the present invention, shown in Figure 1, the heating element 4 has conductive paths 7 defining a "comb-like" surface pattern, i.e. it has a plurality of conductive paths 7 substantially parallel to each other which extend between respective connection regions 4a, 4b, which are electrically coupled to conduction terminals of the generator 8.

It is however clear that the conductive paths can form a different pattern from that shown in Figure 1, for example, they may extend to form a grid, generic curvilinear paths, a radial pattern, and much more, for example in order to cover specific areas of the structure 1 that house freezing-sensitive elements. It is also clear that the entire region 3 can be covered by a uniform conductive layer devoid of the insulating regions 6.

According to one aspect of the present invention, the heating element 4 is a layer based on graphene and/or its derivatives (prGO, poG, GO), in which the insulating regions 6 are made of graphene oxide (GO) having excellent electrical insulation properties (e.g., with a resistivity equal to or greater than 10¹² Ωm), and the conductive paths 7 are made of partially reduced graphene oxide (prGO) having a resistivity lower than that of the insulating regions 6 (for example, a resistivity in the range of from 10⁻⁶ to 10⁻² Ωm). The process of reduction of the graphene oxide layer, known per se, can be modulated and allows for obtaining a resulting layer having electrical and thermal properties, which increasingly tend towards those of neat graphene as the reduction process proceeds. It is therefore possible to define conductive paths 7 having a resistivity value specifically designed for each of them, and so that one conductive path 7 can have a different resistivity value from that of another conductive path 7.

One of the main methods for reducing graphene oxide comprises, as better illustrated in the following, a chemical reduction method with hydrazine monohydrate. Alternately or simultaneously with the use of hydrazine, it is also possible to use hydroquinone, sodium borohydride and vitamin C.

The connection regions 4a, 4b, which are electrically coupled to the conduction terminals of the generator 8, extend as a prolongation of the conductive paths 7 and hence may have the same conductive characteristics as the latter. However, it is preferable to provide the connection regions 4a, 4b with a higher conductivity than that of the conductive paths 7, so as to avoid excessive heating in the area thereof. For example, the connection regions 4a, 4b may be made of graphene, or reduced graphene oxide (rGO), or partially reduced graphene oxide (prGO) with a lower resistivity than the resistivity value of the conductive paths 7, for example between 10⁻⁷ Ωm and 10⁻⁸ Ωm.

It is also possible to electrically couple to each other a plurality of heating elements of the type shown in Figure 1 (or variants thereof as described), mutually connected in series or in parallel to form any type of heating path (pattern). In this case, the electrical connection lines between one heating element and a second heating element are made of a material having a higher conductivity than that of the conductive paths 7 (lower resistivity), so as not to generate energy dispersion and heat production where not required. The conductive paths connecting different heating elements may be made of graphene, or reduced graphene oxide (rGO), or partially reduced graphene oxide (prGO) with a lower resistivity than the resistivity value of the conductive paths 7, for example between 10⁻⁷ Ωm and 10⁻⁸ Ωm.

Accordingly, it is apparent that the heating element 4, as it is a single layer, has no structural criticality due to junctions between the insulating regions 6 and the conductive paths 7, and therefore can be used in applications requiring a high degree of structural strength, such as aeronautical and avionic applications.

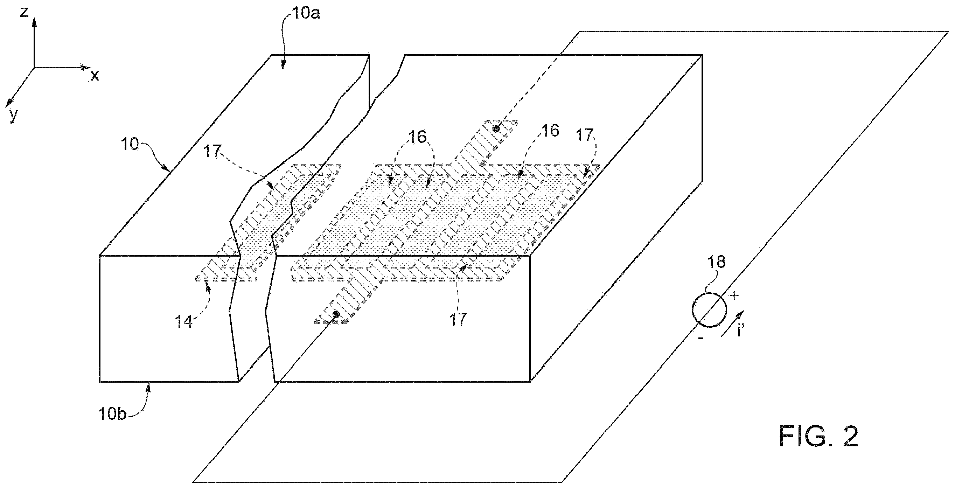

Figure 2, according to a further embodiment, shows a portion of a structure 10 of an aircraft (not shown in its entirety), for example a portion of a moving part (e.g., wing flaps or slats, wing spoilers, wing ailerons, tail rudder, vertical stabilizers), an avionic radome, tail cone, undercarriage doors, and much more.

The structure 10 has, similarly to what described with reference to structure 1 in Figure 1, an upper surface 10a and a lower surface 10b, opposite one another along the axis Z. According to the embodiment of Figure 2, a heating element 14 extends buried inside the structure 10, i.e. between the upper surface 10a and the lower surface 10b.

The heating element 14 is similar to the heating element 4, and is formed by a thin layer including conductive paths 17 of partially reduced graphene oxide (prGO) and insulating regions 16 of graphene oxide (GO). The resistivity of the conductive paths 17 is chosen so as to generate, upon the passage of a flux of electric current i', heat by Joule effect. The heat thus generated heats the structure 10 in the area of the inner portion thereof, which houses the heating element 14, and the heat propagates towards the upper surface 10a and the lower surface 10b, as well as laterally to the inner portion of the structure 10 which houses the heating element 14.

The heating element 14 is functionally connected to conduction terminals of a voltage generator 18 configured to cause, in use, an electric current flux i' through the heating element 14, the value of which is, as said, selected depending on the specific application and the expected temperature gradient.

The conductive paths 17 of the heating element 14 may form a pattern of the type already shown in Figure 1, or may extend to form a grid, generic curvilinear paths, a radial pattern, or still another shape, as required. A uniform, buried, conductive layer, devoid of insulating regions, can also be integrated in the structure 10.

The voltage generator 18 is configured to polarize the heating element 14 to working voltages, e.g. between 24 V and 48 V in the avionics field, so that an electric current i' flows through the conductive paths 17 of the heating element 14, thus generating heat by Joule effect.

According to one embodiment of the present invention, the structure 1 and the structure 10 of Figures 1 and 2 are made of a composite material, such as for example a laminar composite material, in particular carbon fibre having a resin matrix which holds the carbon fibres in place and gives shape to the composite article.

It will be apparent that the structure 1 and the structure 10 may be made of a different material from that mentioned above, for example fibreglass or metal.

The resistivity value of the conductive paths 7, 17 is designed on the basis of the operating conditions in which the structures 1, 10 are used. To this end, the following experimental measurement process can be used to create a database in which a specific desired temperature gradient Δ_{g}=T_{g}-Tₐ is associated with a resistivity value of the conductive paths. The term Tg represents the temperature of the conductive paths 7 during use (i.e., when the generator 8 is active) and Tₐ is the temperature of the environment outside the structure 1. The gradient Δ_{g} is therefore representative of the surface temperature at the region 3 during use.

Consider therefore the thermal balance equation V²/R=h·S·Δg. The parameter "V²/R" represents the electrical power (which is converted into heat by Joule effect) supplied to the heating element 4 by means of the generator 8 (wherein V is the voltage supplied by the generator 8 and R is the equivalent strength of the heating element 4, as viewed from the generator 8) and h·S·Δ_{g} represents the thermal power transmitted. The value of the equivalent strength R of the heating element 4 can be measured experimentally in the laboratory, in a manner known per se. For the purposes of the present specification, the strength value R is considered constant.

The parameter "S" represents the surface area of the conductive paths 7, i.e. the heat exchange surface (known as a design parameter).

The parameter "h" represents the adduction coefficient that takes into account the heat transmission coefficient by conduction only (case of heat exchange between solids in contact without the action of a fluid) and the heat transmission coefficient by convection only (case of heat exchange between a solid and a fluid).

In order to experimentally obtain the value of the parameter h in a first operating condition, the structure 1 is exposed to a test ambient temperature in the absence of wind or air streams, to simulate an operating condition of the aircraft on the ground.

A voltage (e.g., 24 or 48 V DC) is applied between the connection regions 4a, 4b.

The total current i that flows through the heating element 4 is then measured.

The temperature gradient Δ_{g}=T_{g}-Tₐ existing between the heating element 4 and the external environment is measured by direct measurement of the temperature.

The "h" value due to transmission by free convection only (minimum h value) is then calculated as h₁= (V²/R) / (S·Δ_{g}).

The value of the "h" parameter is then calculated under a further operating condition, i.e. in the presence of a stream of air, simulating a flight condition. In airflow conditions with a non-null speed, phenomena of heat transfer by convection are favoured, and they are referred to as forced convection. Therefore, the value of the parameter "h" can also increase by 2 orders of magnitude. In order to calculate this "h" parameter, a condition of forced convection is therefore set by subjecting the structure 1 to an air stream with a speed in the range of 50 - 300 km/h (speed of the aircraft during take off and landing).

In this case too, a voltage (e.g., 24 or 48 V DC) is applied between the connection regions 4a, 4b.

The total current i that flows through the heating element 4 is then measured.

The temperature gradient Δ_{g}=T_{g}-Tₐ existing between the heating element 4 and the external environment is measured by direct measurement of the temperature.

The "h" value due to transmission by forced convection is then calculated according to the formula h₂= (V²/R) / (S·Δ_{g}).

For the sizing of the design parameters, since the parameter h₂ depends on the speed at which the airflow laps against the structure 1, its maximum value may be used, which corresponds to the value that "h" takes when the speed of the air is maximum for the considered operating condition (manoeuvring of the aircraft), depending on the specific application. Alternatively, after calculating both the minimum value and the maximum value of "h", its average value may be used.

With reference to the structure 10 of Figure 2, the measurements of the total current i' that flows through the heating element 14 are repeated, and the temperature gradient between the heating element 14 and the environment outside the structure 10 is measured.

The value of h due to transmission by convection and/or conduction is then calculated. It is here noted that, in the case of the buried heating element 14, the heat exchange mechanisms are dependent on the thickness of the structure and the thermal coupling between the heating element and the structure; for aeronautical applications, the convection component only can be considered, while, more in general, the measured value of "h" will be due to a combination of the two effects (convection and conduction). The value of h due to transmission by convection is calculated in the presence of a temperature gradient T_{g}-Tₐ between the heating element 14 (at a temperature Tg) and the environment outside the structure 10 (ambient temperature Tₐ). To this end, the steps already described with reference to structure 1 are performed, thus obtaining a third value for the "h" parameter provided by h₃₌ (V²/R) / (S·Δ_{g}), which can be applied to a buried heating element 14 of the free convection type.

By repeating the previous measurement in the presence of an air stream with a speed such as to simulate the take-off and landing phases, similarly to the measurement already described for the structure 1 in Figure 1, a fourth value is obtained for the "h" parameter, as h₄₌ (V²/R) / (S·Δ_{g}), which can be applied to a buried heating element 14 of the forced convection type. For the sizing of the design parameters, the same considerations made for h₂ also apply to h₄, so it is possible to use either the maximum value or the average value.

Once the values h₁, h₂, h₃ and h₄ are known in the respective operating conditions and embodiments of Figures 1 and 2, the heating elements 4, 14 may be designed on the basis of the desired temperature gradient Δ_{g}. Different structural components of the aircraft can therefore be manufactured with different heating elements designed to ensure an optimum temperature gradient for that particular component. For example, structural components arranged close to heat sources (e.g., motors) will be subject to a different temperature gradient than structural components arranged, for example, on the nose of the aircraft. In this case, it is possible to design heating elements 4, 14 adapted to generate different amounts of heat depending on the spatial arrangement of the respective structural components to which they are coupled, by modulating the respective strength value.

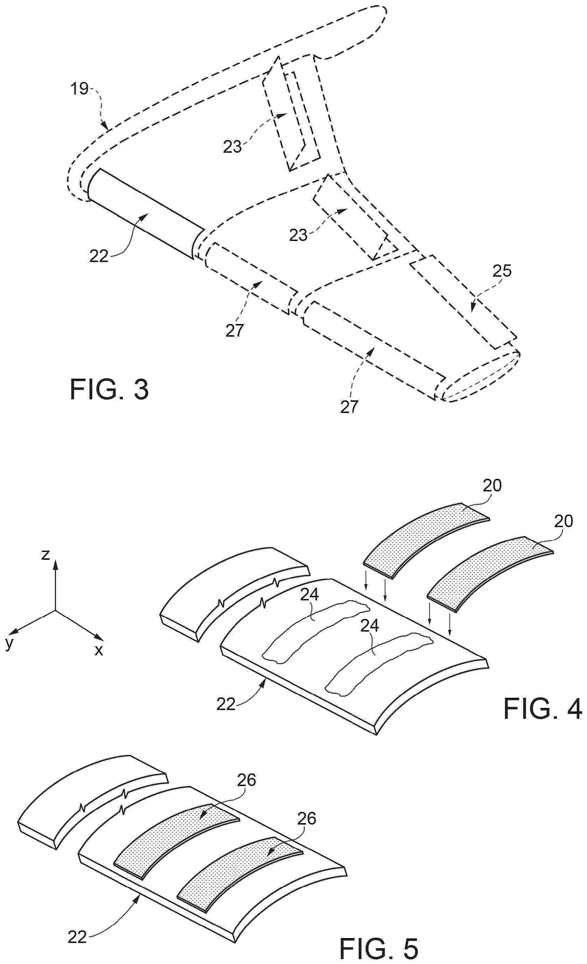

With reference to Figures 3-8, a method is shown for manufacturing a structural component, particularly of an aircraft, provided with a heating element, according to one aspect of the present invention. In this example, as shown in Figure 3, the focus is on a slat 22 of a wing 19. However, this description applies equally to other elements of the wing 19, for example the spoilers 23, aileron 25 and on-board high-lift devices ("flaps") 27, or additional parts and components of the aircraft.

First of all, with reference to Figure 4, one or more layers (or sheets) of graphene oxide 20 are provided, with a thickness, for example, between 50 µm and 150 µm. The extension on the XY plane of a single layer/sheet varies according to the manufacturer and, generally, sheets with dimensions ranging from a few centimetres to several metres are available. Solutions are also available in the liquid form.

A gluing step is then performed to glue these sheets of graphene oxide onto the structural component where the formation of a heating element, in this example the slat 22, is desired. For example, the sheets of graphene oxide 20 may be adhered to respective portions of the slat 22 through an interface layer 24 manufactured by means of an adhesive or glue or resin, thus forming, Figure 5, one or more layers of graphene oxide 26 partially covering the slat 22. A total coverage of the slat 22 can also be provided. A subsequent thermal treatment step allows the interface layer to be solidified and the adhesion to be optimized.

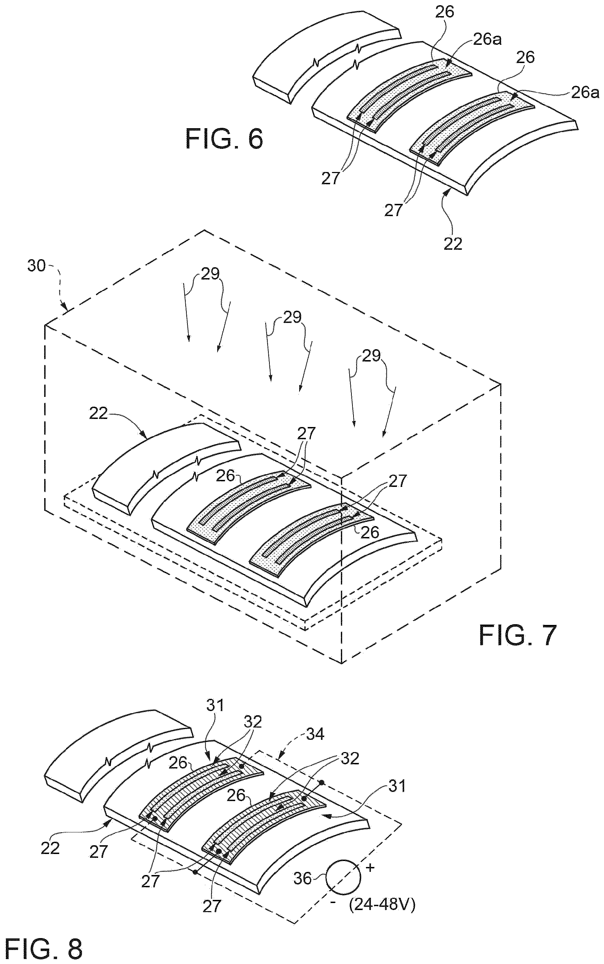

Then, Figure 6, a respective mask 27 is formed over the layers of graphene oxide 26 so that surface regions 26a thereof are left uncovered, which are regions where the electrical resistivity value is desired to be reduced, and conductive paths adapted to generate heat by Joule effect, as previously described, are desired to be produced. Techniques that can be used to form the mask, required for the selective processing of the surface portions, depend on the size and the specific application; for example, known masking methods for chemical milling processes can be used.

Then, Figure 7, the slat 22 provided with the layer of graphene oxide 26 on which the mask 27 extends is placed in a reaction chamber 30 in which hydrazine is supplied, as represented by the arrows 29.

Since the greater the duration of the reaction with hydrazine, the greater the reduction of graphene oxide, by monitoring the time of reaction between hydrazine and the layers of graphene oxide 26 (in the unmasked regions 26a) the reduction process can be stopped when the desired conductive characteristics have been reached.

For example, by using a hydrazine solution commercially available for this specific application, with a reaction time of 48 hours, the resistivity of a layer of graphene oxide with a thickness of about 10 µm is reduced by three orders of magnitude, from about 10¹² Ωm to 10⁹ Ωm. The Applicant established that a process of reduction of graphene oxide with hydrazine carried out for a time equal to 48 hours is able to modify the electrical characteristics of the layer which, being first a perfect insulator (constant VI characteristic, with V in the range of [-5V;+5V], and I<1pA) becomes an ohmic material (linear VI characteristic with V in the range of [-5V;+5V], I in the range of [-6nA;+6nA]). This aspect is particularly important for the objects according to the present invention, as it demonstrates that the reduction of resistivity of a layer of graphene oxide is dependent on the time of exposure to hydrazine (by increasing the exposure time, the resistivity is reduced). The resistivity value of the heating element 4, 14 can thus be adjusted to the desired value.

Lastly, Figure 8, the slat 22 structure is removed from the reaction chamber 30 and the mask 27 is excised. Heaters 31 are thus obtained, which have conductive paths 32 extending into the previously unmasked areas of the layers of graphene oxide 26, similarly to what described with reference to Figure 1. The conductive paths 32 extending into both the layers of graphene oxide 26 can be polarized to the voltages present on board the aircraft, by connecting them via conductive paths 34 (e.g., inside the wing 19) to a voltage generator 36 (shown as a dashed line in Figure 8). Figure 8 shows a parallel connection of the conductive paths 32 of the layers of graphene oxide 26; however, it is clear that any type of electrical connection can be realized.

The structural component considered, in this case the slat 22, provided with the heaters 31, can then be subjected to remaining manufacturing steps, such as for example painting. In the case of use of a conductive paint, it is advisable to electrically insulate the heaters 31, for example with a superficial layer of graphene oxide or composite material (e.g., carbon fibre).

As previously mentioned, alternatively or in addition to the use of hydrazine, the reduction may be alternatively carried out with sodium borohydride NaBH₄. Other reducing agents used are, for example, hydrogen gas, hydroquinones and strong alkaline solutions.

Other known methods include high temperature thermal treatment (typically, at about 1000°C); however, a thermal treatment at such high temperatures could compromise the structural solidity of the components on which the oxide layer has been glued, as well as the functionality of the adhesive or glue interface layer.

According to a different embodiment of the present invention, it is possible to perform a negative process, i.e. a process in which unmasked areas of graphene sheets are oxidised so as to bring them into an electrical insulation condition. In this case, the graphene oxide sheets 20 of Figure 4 are replaced by graphene (an excellent electrical conductor) sheets, which are coupled to the avionic structure (e.g., the slat 22) to form respective graphene layers. These graphene layers (in the absence of masking) are then subjected to a first oxidation so as to obtain a desired electrical resistivity value for the conductive paths, thus forming regions of partially oxidized graphene (also known as poG) with a controlled resistivity. The oxidation is carried out by immersion in an aqueous solution rich in oxidizing agents.

At this point, the partially oxidised graphene layers are then masked to cover the portions corresponding to the conductive paths (of the type of the conductive paths 7) that are desired to be formed. The regions remained exposed are then totally oxidized in order to complete the formation of graphene oxide insulating regions (of the type of the insulating regions 6) in areas that do not have the surface masking.

As regards the manufacture of the structure 10 of Figure 2, the above description is applied in a similar manner. However, after the step of Figure 7 and the removal of the mask 27, the structural component 22 is subjected to further manufacturing steps in order to complete the formation thereof. For example, further layers of the material used for the manufacture of the structural component 22 are formed or coupled over the heaters 31 and the electrical connections 34; the latter are thus embedded, or buried, inside the structural component 22. The material used for the manufacture of the structural component 22 is, for example, a composite material, such as carbon fibre. In this case, the interface layers with the heater element 14 are formed by respective layers of the same resin as used for the manufacture of the composite material, which adheres and incorporates the heater element 14, thus forming a seamless sandwich structure.

According to a further embodiment of the present invention, in contrast to what is described with reference to Figure 4, graphene oxide is directly deposited on the structural component considered. It is evident that, in this case, the structural component must have shapes and dimensions compatible with those of a reactor for the deposition of graphene oxide. Known deposition processes, mostly used for small components, involve the use of chemical vapour deposition (CVD) techniques.

Other techniques of interest for industrial applications include transfer techniques involving the use of thermal transfer ribbons or transfer supports, in particular a polymethylmethacrylate (PMMA) support provided with a continuous layer of graphene and/or its derivatives, which is then transferred onto the surface to be covered. Both of these methods are known per se and commercially available.

Other methods for the formation of a layer of graphene and/or its derivatives include gravimetric techniques, which exploit the water solubility properties of graphene oxide, and comprise "drop casting" (coverage by dripping), "spin coating" (coating by rotation) and "dip coating" (coating by immersion). Graphene oxide diluted in aqueous solution is commercially available.

For example, in the case of drop casting, a graphene oxide aqueous solution is used in order to form a surface layer on the structural component on which a layer of graphene oxide is desired to be formed. Then, a high temperature evaporation step is performed in order to evaporate the solvent of the solution (in this example, the solvent is water). At the end of the evaporation step, a layer of graphene oxide forms, which adheres to the surface of the structural component. This layer can then be subjected to the steps of masking and subsequent processing already described with reference to Figures 5-8.

Spin coating is a procedure known per se and used for applying a thin and uniform layer onto a flat solid substrate. To this end, an excess amount of a graphene oxide solution is deposited onto the substrate, which is subsequently rapidly rotated by means of a suitable rotor, in order to spread the fluid over the substrate due to the centrifugal force effect. The rotation is stopped as soon as the desired thickness is reached. Spin coating has the advantage of allowing the formation of a layer with a more uniform thickness compared to drop casting. However, in this case, the structural component considered must have a small size and a substantially flat surface.

The dip coating technique, known per se, is a process used for depositing thin layers onto a solid substrate by immersing said substrate in a bath containing a solution of the material to be deposited, followed by subsequent removal and drying. The coated part can be dried by means of forced drying or baking. The dip coating process provides the following steps: immersion, in which the structural component is immersed in the solution containing the graphene oxide to be deposited at constant speed and avoiding sudden stirring; permanent contact with the solution, in which the structural component is kept stationary and completely immersed in order to allow the deposition of the graphene oxide coating; and extraction, in which the structural component is extracted from the solution at constant speed and avoiding sudden stirring. This technique guarantees a good thickness uniformity of the layer of graphene oxide obtained, and can be used for structural components having various shapes and sizes.

The electric heater described according to the present invention can also be used in an automated anti-icing system by using a thermostatic controller configured to (i) activate the heater (i.e., supply a voltage to the heating element in prGO or poG) when the detected ambient temperature is below the water freezing point; and (ii) deactivate the power supply to the heater when the temperature of the structure (or rather, of the region 3 to which the heater is coupled) is such as to avoid the risk of ice formation.

From the foregoing, it appears that the inventive subject matter according to the present invention represents a significant progress with respect to what is reported in the literature and known in the state of the art.

The use of a layer of graphene oxide, which is partially reduced at selected portions thereof, such as to confer lightness, strength, flexibility and reliability characteristics to a defrosting layer with controlled electrical and thermal conductivity. The same advantages are provided by the use of a layer of grafene that is subsequently oxidized. Grafene sheets with a thickness of a few tens of micrometers, as well as its derivatives (prGO, poG) are extremely resistant and have excellent elastic and flexibility properties. It is therefore ideal for the provision of defrosting layers in aeronautical structures.

The present invention therefore results in a significant improvement of existing aeronautical structures in terms of weight, size and performance, and a reduction in direct and indirect costs.

Lastly, it is clear that the inventive subject matter described and illustrated herein can be subject to modifications and variations without however departing from the protective scope of the present invention, as defined in the appended claims.

For example, the above description also applies to moving parts and radomes of naval and terrestrial vehicles.

## Claims

1. A structural element (1; 10) of a transport means adapted to operate at temperatures below the water freezing point, housing a resistive heater (4; 14) having conduction terminals (4a, 4b) configured to be coupled to a voltage generator (8; 18) adapted to cause a current flux (i; i') through the resistive heater,
**characterized in that** said resistive heater (4; 14) comprises one or more conductive paths (7; 17) of partially reduced graphene oxide, or partially oxidized graphene, extending between, and electrically coupled to, said conduction terminals (4a, 4b), said conductive paths being configured to generate, when the current flux (i; i') passes through them, heat by Joule effect thus carrying out a defrosting operation of a region (3) of the structural element.

2. The structural element according to claim 1, wherein said resistive heater (4; 14) comprises a layer of graphene oxide in which said one or more conductive paths (7; 17) of partially reduced graphene oxide are defined, separated from each other by one or more insulating areas (6; 16) of graphene oxide.

3. The structural element according to claim 1, wherein said resistive heater comprises a layer of graphene in which said one or more conductive paths (7; 17) of partially oxidized graphene are defined, separated from each other by one or more insulating areas (6; 16) of totally oxidized graphene.

4. The structural element according to claim 2 or 3, wherein said one or more conductive paths (7; 17) have a resistivity value in the range between 10⁻⁶ Ωm and 10⁻² Ωm and said one or more insulating areas (6; 16) have a resistivity value equal to, or greater than, 10¹² Ωm.

5. The structural element according to any one of the preceding claims, wherein the conductive paths (7; 17) of said resistive heater define, between the conduction terminals (4a, 4b), an equivalent resistance chosen so as to generate, at the region of the structural element (3), a heat quantity sufficient to inhibit the formation of ice when the conduction terminals (4a, 4b) are polarized to a voltage between 24 V and 48 V in direct current.

6. The structural element according to any one of the preceding claims, wherein said resistive heater (4; 14) extends correspondingly with a surface portion (1a) of the structural element (1).

7. The structural element according to any one of the preceding claims, wherein said resistive heater (4; 14) is buried within the structural element (10).

8. The structural element according to claim 6 or 7, wherein said structural element is made of a composite material.

9. The structural element according to any one of the preceding claims, wherein said resistive heater (4; 14) is formed by a plurality of layers extending side by side, each having respective conductive paths (7; 17) of partially reduced graphene oxide or partially oxidized graphene, in which the conductive paths of a layer are electrically connected in series with the conductive paths of the other layers.

10. The structural element according to any one of the preceding claims, wherein said resistive heater (4; 14) is formed by a plurality of layers extending side by side, each having respective conductive paths of partially reduced graphene oxide or partially oxidized graphene, in which the conductive paths of a layer are electrically connected in parallel with the conductive paths of the other layers.

11. The structural element according to any one of the preceding claims, further housing said voltage generator (8; 18) electrically coupled to the conduction terminals (4a, 4b) of the resistive heater (4; 14) and configured to cause said current flux (i; i') through the resistive heater.

12. The structural element according to any one of claims 1-11, selected from the group comprising: high-lift device of the flap type, high-lift device of the slat type, wing spoiler, wing aileron, tail rudder, vertical stabilizer, radome, tail cone of an aircraft.

13. A means of transport comprising a structural element (1; 10) according to any one of claims 1-12.

14. The means of transport according to claim 13, selected from the group comprising: an aircraft, a helicopter, an unmanned aerial vehicle (UAV), terrestrial means, naval means.

15. A method of manufacturing a structural element (1; 10) of a means of transport adapted to operate at temperatures below the water freezing point, comprising the steps of:
- forming a resistive heater (4; 14) at a region (3) of said structural element (1; 10); and
- forming conduction terminals (4a, 4b) of the resistive heater configured to be electrically coupled to a voltage generator (8; 18) adapted to cause a current flux (i; i') through the resistive heater,
**characterized in that** the step of forming said resistive heater (4; 14) comprises:
forming one or more conductive paths (7; 17) of partially reduced graphene oxide or partially oxidized graphene; and
electrically coupling said one or more conductive paths (7; 17) to the conduction terminals (4a, 4b),
wherein said conductive paths are configured to generate, when the current flux (i; i') passes through them, heat by Joule effect.

16. The method according to claim 15, wherein the step of forming the resistive heater comprises forming the resistive heater (4; 14) at a surface area (1a) of the structural element (1).

17. The method according to claim 15, wherein the step of forming the resistive heater comprises:
providing a first portion of the structural element (10) made of a composite material;
forming the resistive heater (4; 14) at a surface of the first portion of the structural element; and
forming a second portion of the structural element, made of a composite material, on the first portion so as to cover the resistive heater and form a sandwich structure.

18. A method of operating a structural element (1; 10) according to any one of claims 1-12, comprising the steps of:
polarizing, by means of the voltage source (8; 18), the resistive heater (4; 14) to a voltage comprised between 24 and 48 V in direct current;
causing a current flux (i; i') through the resistive heater;
generating, by means of the resistive heater, Joule effect heat by locally heating the structural element (1; 10).
